# EUROPEAN PATENT APPLICATION

(11) **EP 1 935 546 A1**
(43) Date of publication of application: **25.06.2008**
(21) Application number: 06126844.7
(22) Date of filing: 21.12.2006
(51) Int. Cl.: B23K 1/005, B23K 3/04, B23K 26/06, B23K 26/073, B23K 26/08, G02B 6/10

(54) **Laser brazing heating assembly with optic fibre having at least at a distal end a non-circular cross section ; Laser brazing tool and robot with such a laser brazing heating assembly ; Useof such optical fibre with at least at a distal end a non-circular cross section for laser brazing**

(71) Applicant: Ford Global Technologies, LLC, Dearborn, MI 48126 (US)
(72) Inventor: PALMQUIST, Niclas, SE-423 38 Torslada (SE)
(74) Representative: Valea AB

(57) **Abstract**

The present invention relates to a laser brazing heating assembly (10), comprising a laser source (12) adapted to produce a laser beam (14). The assembly (10) further comprises an optic fibre (16) having a proximal end (18) and a distal end (20). The proximal end (18) is connected to the laser source (12) and the distal end (20) is adapted to emit the laser beam (14). At least a portion (22) of the fibre (16), which extends along the length of the fibre and is located at the distal end (20), has a non- circular cross section.
The invention further relates to the use of a fibre (16) in a laser brazing heating assembly (10) or a laser brazing tool, wherein at least a portion of said fibre (16) extending along the length of said fibre (16) and being located at a distal end (20) has a non-circular cross section.

## Description

### TECHNICAL FIELD

The present invention relates to a laser brazing heating assembly, comprising a laser source adapted to produce a laser beam. The assembly further comprises an optic fibre having a proximal end and a distal end. The proximal end is connected to the laser source and the distal end is adapted to emit the laser beam.

The invention further relates to the use of such a fibre in a laser brazing heating assembly or a laser brazing tool.

### BACKGROUND OF THE INVENTION

Brazing is a common technique used to join two close-fitting surfaces. It involves placing a filler material such as a metal or metal alloy in the junction between two surfaces and applying heat so that the filler material melts. The filler material can then flow at least partially into the junction and solidify to form a brazed joint, thus bonding the two surfaces tightly together. The filler material and the material of the surfaces often partially dissolve one another at the interface, leading to strong bonding at a molecular level.

In laser brazing, the filler material is heated with a laser, which can provide accurate, controllable heating. However, one problem with current laser brazing processes is that, upon cooling and solidifying, the filler material forms pores, some of which can break the surface of the brazed joint. With conventional laser brazing processes, it is estimated that between 2 and 4% of the brazed joint comprises surface-breaking pores. Porosity is thought to be caused by small impurities in the filler material, impurities or defects in the surfaces to be joined and the laser brazing process itself. By lowering the impurities in the filler material and the contamination of the surfaces, the percentage of surface-breaking pores can be lowered to around 2%. Surface-breaking pores can be eliminated by mechanically working the brazed joint (e.g. polishing, grinding or filling), but this technique is time-consuming and labour-intensive. Pores in the brazed joint will tend to have negative effects on the physical properties (e.g. strength) of the joint, and surface-breaking pores are a particular problem in applications requiring a smooth finish. Furthermore, in conventional laser brazing, rings or herring-bone patterns can form on the surface of the filler material as it cools.

In conventional laser brazing, the heat is generally applied by a laser brazing heating assembly providing a circular laser spot, resulting in an energy intensity having substantially a Gaussian distribution, i.e. high energy intensity in the centre of the spot diminishing towards its circumference. It is known from the prior art that providing a laser spot with a non-Gaussian, for example a top hat shaped, energy intensity distribution may in fact improve the quality of the brazed joint.

JP 58205675 discloses that a non-Gaussian energy intensity distribution may be obtained by splitting up a laser beam into two, transmitting each laser beam through a separate optical fibre and subsequently merging the two beams using a condenser lens so as to obtain a substantially oval laser spot having a more or less camel shaped energy intensity distribution. However, obtaining a laser spot by splitting up a laser beam and subsequently merging the split up beams makes generation of an arbitrary shaped laser spot difficult, for example a laser spot providing a top hat shaped energy intensity distribution. Furthermore, the cost of the laser brazing heating arrangement utilizing the technique above may be expensive, since at least two optic fibres are needed. Furthermore, if any one of the fibres is damaged, the brazing operation generally has to be stopped since an insufficient laser spot is provided.

US 6 331 692 discloses a laser beam, which may be used for laser brazing, which provides a line focus rather than a circularly focusable beam. The line focus is obtained by a laser diode arrangement consisting of several laser chips, wherein the arrangement is shaped so as to form a line. However, the diode arrangement is rather fragile and may be damaged when in use due to e.g. an impact with a fixture or a work piece during the brazing operation resulting in a subsequent need for replacement of the diode arrangement. Since the diode arrangement is an expensive product, any damage on the diode arrangement makes the brazing operation as a whole significantly dearer.

### SUMMARY OF THE INVENTION

A first object of the invention is to provide a laser brazing heating assembly which provides a laser spot with a non-Gaussian energy intensity distribution.

A second object of the invention is to provide a laser brazing heating assembly in which the most fragile and/or expensive components thereof are located at a safe distance from the brazing area.

A third object of the invention is to provide a laser brazing heating assembly which may be obtained by converting a traditional laser brazing heating assembly, generally providing a circular laser spot.

At least one of the aforementioned objects is achieved by a laser brazing heating assembly as claimed in appended claim 1.

Thus, the invention relates to a laser brazing heating assembly, comprising a laser source adapted to produce a laser beam. The assembly further comprises an optic fibre having a proximal end and a distal end. The proximal end is connected to the laser source and the distal end is adapted to emit the laser beam. According to the invention, at least a portion of the fibre, which extends along the length of the fibre and is located at the distal end, has a non-circular cross section.

Using a laser brazing heating assembly according to the invention, a non-circular laser spot is obtainable. Thus, a non-Gaussian energy intensity distribution may be applied on the filler material in a laser brazing operation, which in turn results in an improved brazed joint.

Since the non-circular laser spot is obtained by using an optic fibre having a distal portion with a non-circular cross section, a plurality of different laser sources may be used in the heating assembly of the invention. For example, a traditional laser source providing a circular laser spot may be used in conjunction with the aforesaid optic fibre. Thus, a heater assembly of the invention may be obtained by converting a traditional laser brazing heater assembly by simply replacing the original optic fibre, having a constant circular cross-section, with a new optic fibre having a distal portion with a non-circular cross section.

According to a preferred embodiment of the invention, the cross section of the fibre is substantially constant from the distal end to the proximal end. This may result in an optic fibre which is easy to manufacture and which furthermore ensures that the non-circular shape of the laser spot is obtained.

According to another embodiment of the invention, the cross section is substantially square. A substantially square cross section may result in an energy intensity distribution generally in the shape of a top hat, which improves the quality of the brazed joint.

According to a further embodiment of the invention, the cross-sectional area of the portion located at the distal end of the fibre is in the range of 0.01 - 0.8 mm², preferably in the range of 0.1 - 0.5 mm². This will generally ensue a sufficiently high energy intensity while still providing an appropriately wide laser spot in order to distribute the filler material.

According to another embodiment of the invention, the length of the optic fibre is more than 5 m, preferably more than 10 m. Lengths of these magnitudes permit the laser source to be located at an appropriately large distance from the laser brazing area.

According to a further embodiment of the invention, the assembly further comprises an optics arrangement adapted to communicate optically with the distal end, the optics arrangement comprising at least one of the following: a condenser lens; a divergent lens, or a deflection mirror. The optics arrangement may preferably be used for adjusting the size, and hence the energy intensity, of the laser spot. Furthermore, the optics arrangement may be used for deflecting the laser beam emitted from the distal end, which may for example be used for creating a compact optics arrangement and/or allow flexibility with respect to the attachment location of the distal end.

According to another embodiment of the invention, the assembly further comprises connection means adapted to mechanically connect the distal end and the optics arrangement. Thus, a fixed connection between the distal end and the optics arrangement is ensured.

According to a further embodiment of the invention, the assembly further comprises an attachment arrangement adapted to optically connect the laser source and the proximal end of the fibre. The attachment arrangement comprises a housing with an opening, wherein the housing is adapted to centre the proximal end within the opening. The attachment arrangement further comprises a focussing lens adapted to focus the laser beam from the laser source onto the proximal end.

According to another embodiment of the invention, the focussing lens and the proximal end are spaced by a distance constituting a focal distance, which focal distance is greater than 20 mm, preferably greater than 50 mm. Furthermore, the laser source is preferably adapted to produce the laser beam such that the laser beam has a cross-sectional area in the range of 180 -3000 mm², preferably within the range of 300 - 900 mm².

A second aspect of the invention relates to a laser brazing tool, which comprises the laser brazing heating assembly of the invention and means for providing a filler material in the vicinity of the distal end. This provides a compact laser brazing tool which is adapted to produce brazed joints having a low porosity.

A third aspect of the invention relates to a laser brazing robot, comprising a laser brazing heating assembly according and/or a laser brazing tool according to the invention. Thus, an automatic laser brazing system is obtained which produces high quality brazed joints.

In a preferred embodiment of the robot of the invention, the robot comprises an arm adapted to guide at least the distal end of the fibre and the laser source is arranged at a distance from the arm. As previously discussed, arranging the laser source so as to be located at a distance from the arm and thus at a distance from the brazing area implies that the laser source, which often is one of the most expensive components in the laser brazing heating assembly, is less susceptible to being damaged.

According to another embodiment of the robot of the invention, the robot further comprises a main body connected to the arm and the laser source is located at a distance from the main body. This may distance the laser source even further from the laser brazing area.

A fourth aspect of the invention relates to the use of an optical fibre in a laser brazing heating assembly or a laser brazing tool, wherein at least a portion of the fibre extending along the length of the fibre and is located at the distal end has a non-circular cross section. Preferably, the fibre has a substantially constant cross section, preferably a square cross section having a cross-sectional area in the range of 0.01 - 0.8 mm², preferably in the range of 0.1 - 0.5 mm².

The benefits of providing an optic fiber in any of the designs described above have been previously discussed and are thus not further elaborated here.

### BRIEF DESCRIPTION OF THE DRAWINGS

The present invention will hereinafter be further explained by means of non-limiting examples with reference to the appended figures wherein:
Fig. 1 is a schematic view of one embodiment of a laser brazing heating assembly of the present invention;
Fig. 2 is a schematic view of another embodiment of a laser brazing heating assembly of the present invention;
Fig. 3 is a partial view a laser brazing heating assembly of the present invention, illustrating an implementation of a connection means between two parts of the assembly;
Fig. 4 is a schematic view of a laser brazing tool of the present invention, and
Fig. 5 is a schematic view of a laser brazing robot using an embodiment of the laser brazing heating assembly of the present invention;

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims.

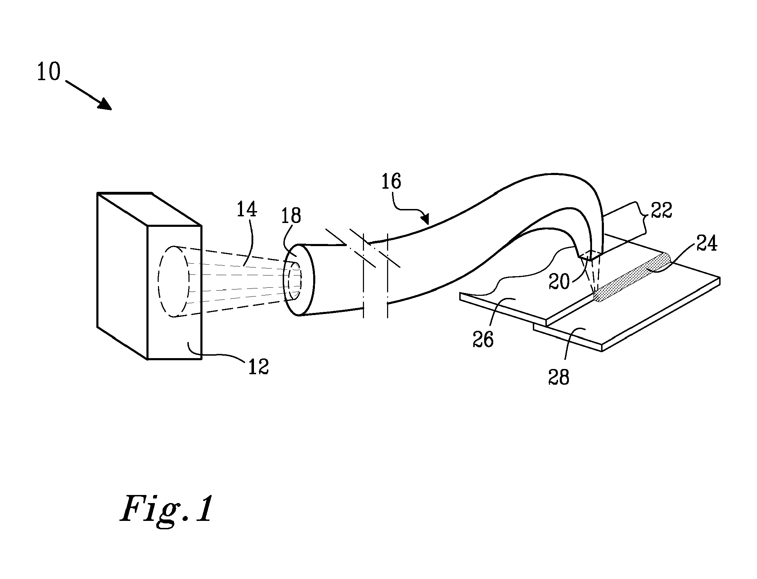

Fig. 1 illustrates a schematic view of an embodiment of the laser brazing heating assembly 10 of the invention. The assembly comprises 10 a laser source 12 adapted to produce a laser beam 14. The laser source 12 may be of any type, as long as it is capable of providing a laser beam having a sufficiently high energy in order to be used in laser brazing operations. The assembly 10 further comprises an optic fibre 16 having a proximal end 18 and a distal end 20. The proximal end 18 is connected to the laser source 12 and the distal end 20 is adapted to emit the laser beam 14 generated by the laser source 12. In the embodiment illustrated in Fig. 1 the laser source 12 and the proximal end 18 are optically connected to one another, which is a sufficient type of connection in order to obtain the appropriate function of the assembly 10. However, in order to ensure that the laser beam is constantly transmitted through the fibre 16 despite of the presence of e.g. relative motions of the laser source 12 and the fibre 16, the connection is preferably also mechanical (not shown). As may be gleaned from Fig. 1, at least a portion 22 of the fibre 16, extending along the length of the fibre 16 and being located at the distal end 20, has a non-circular cross section.

In some applications of the heating assembly 10 of the invention, the laser source 12 may be connected to the proximal end 18 by means of an intermediate optic fibre (not shown) comprising two ends, wherein a first end of the intermediate optic fibre is connected to the laser source 12 and a second end is connected to the proximal end 18. The first end may be connected to the laser source 12 in a manner described above, when discussing the connection of the laser source 12 and the proximal end 18 of the embodiment illustrated in Fig. 1, and the second end may for example be connected to the proximal end 18 by means of an intermediate lens assembly (not shown). Optionally, the second end and the proximal end 18 may be joined by means of cladding.

Thus, the assembly 10 of Fig. 1 is susceptible to producing a non-circular laser spot on a filler material 24, and possibly to some extent also on a first member 26 and or a second member 28 which are to be joined by means of laser brazing.

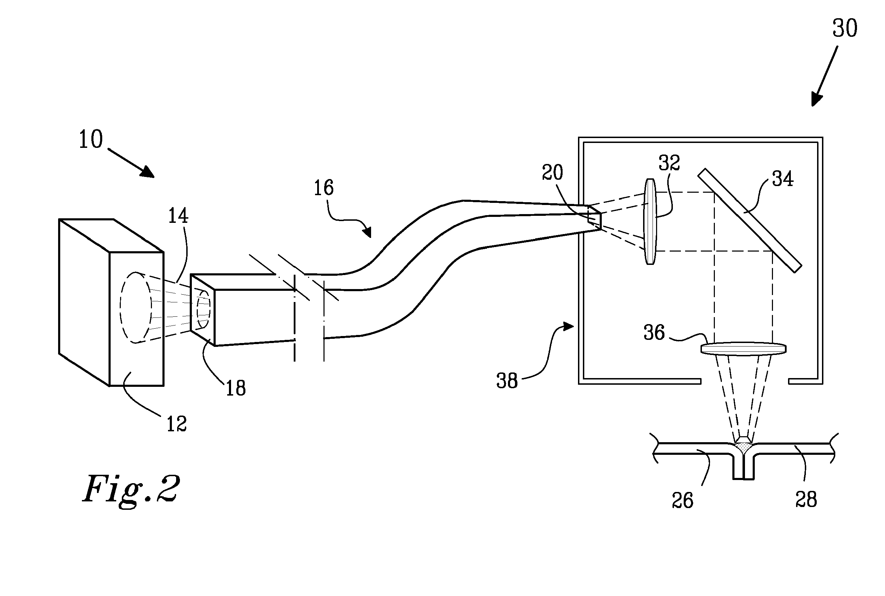

In the embodiment illustrated in Fig. 1, the cross section of the portion 22 of the fibre 16 located at the distal end 20 is substantially square. However, portions having other non-circular cross sections may be used, e.g. oval, rectangular or triangular, in order to obtain a laser spot which produces brazing joints with low porosity. Furthermore, instead of using an optic fibre 16 having only a portion 22 with a non-round cross section, a fibre 16 may be used, wherein the cross section of the fibre 16 is substantially constant from the distal end 20 to the proximal end 18. An embodiment of the heater assembly 10 of the invention having a fibre 16 with a constant cross section is illustrated in Fig. 2.

The cross-sectional area of the portion 22 of the fibre 16 is preferably in the range of 0.01 - 0.8 mm², preferably in the range of 0.1 - 0.5 mm² and the length of the optic fibre 16 is preferably more than 5 m, preferably more than 10 m.

Fig. 2 illustrates another embodiment of the laser brazing heating assembly, which further comprises an optics arrangement 30 adapted to communicate optically with the distal end 20 of the fibre 16. In other words, the laser beam emitted from the distal end is receivable by the optics arrangement 30. The optics arrangement 30 as illustrated in Fig. 2 comprises a divergent lens 32, a deflection mirror 34 and a condenser lens 36. As further indicated in Fig. 2, the optics arrangement 30 may be accommodated in a housing 38 having an attachment opening for the distal end 20 of the fibre 16, which attachment opening serves as a connection means for mechanically connecting the distal end 20 and the optics arrangement 30.

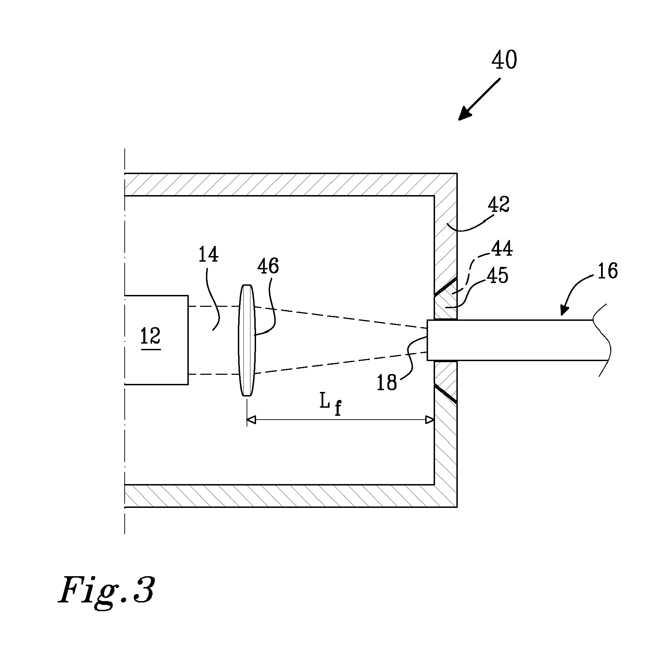

Fig. 3 illustrates a preferred implementation of the connection of the laser source 12 and the proximal end 18 of the optic fibre 16, namely that the connection is achieved by means of an attachment arrangement 40. As may be gleaned from Fig. 3, the attachment arrangement 40 comprises a housing 42 with an opening 44. The housing 42 is adapted to centre the proximal end 18 within the opening 44. To this end, the proximal end 18 is preferably provided with a sleeve 45 and the opening 44 and sleeve 45 have co-acting tapered portions so that, upon insertion of the proximal end 18 in the opening 44, the proximal end 18 will align itself with the centre of the opening 44.

The attachment arrangement further comprises a focussing lens 46 adapted to focus the laser beam 14 from the laser source12 onto the proximal end 18. Preferably, the cross-sectional area of the focussed laser beam 14 entering the optical fibre 16 through the proximal end 18 is smaller than the cross-sectional area of the proximal end 18 in order to not to damage the sensitive portion of the fibre 16 located in the circumference thereof. When the laser beam progresses along the optic fibre 16, the laser beam will diffuse and eventually fill the entire cross section of the fibre 16. It is also possible, though less preferred, to allow the focussed laser beam to have a cross-sectional area greater than the cross-sectional area of the proximal end 18 and instead arrange a light transmitting section (not shown) adjacent to the proximal end 18, which section has a cross-sectional area less or identical to the cross-sectional area of the proximal end 18.

The focussing lens 46 and the proximal end 18 are spaced by a distance constituting a focal distance L_{f}, which distance preferably is greater than 20 mm, preferably greater than 50 mm. Furthermore, the laser source 12 is adapted to produce the laser beam 14 such that the laser beam 14 has a cross-sectional area in the range of 180 -3000 mm², preferably within the range of 300 - 900 mm².

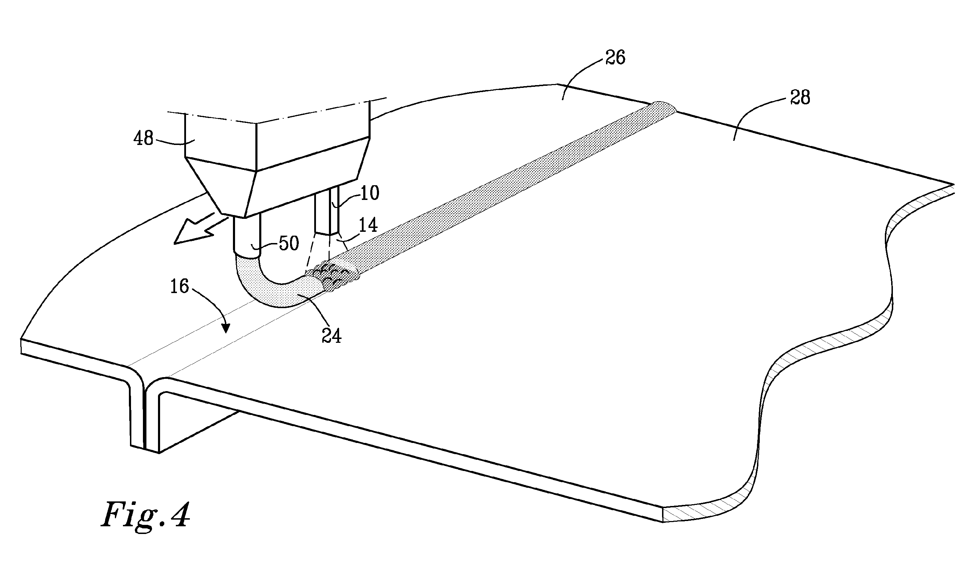

Fig. 4 illustrates an embodiment of a laser brazing tool 48 of the invention, comprising the laser brazing heating assembly 10 and means 50 for providing a filler material 24 in the vicinity of the laser beam emitting part of the heating assembly 10. As previously indicated, this part may be the distal end 20 of the optic fibre 16 or an emitting portion of an optics arrangement 30, connected to the distal end 20. Thus, filler material 24 can be provided and the joint brazed in one traverse of the laser brazing tool 48. Line feed can be used for providing filler material 24.

A variety of filler materials 24 can be used in the present invention. The choice of filler material 24 usually depends on the materials to be brazed. Silver, tin, copper, zinc, aluminium and their alloys are particularly suitable filler materials 24. Alloys of these metals with one another are also suitable. Copper alloys are particularly suitable as filler material 24.

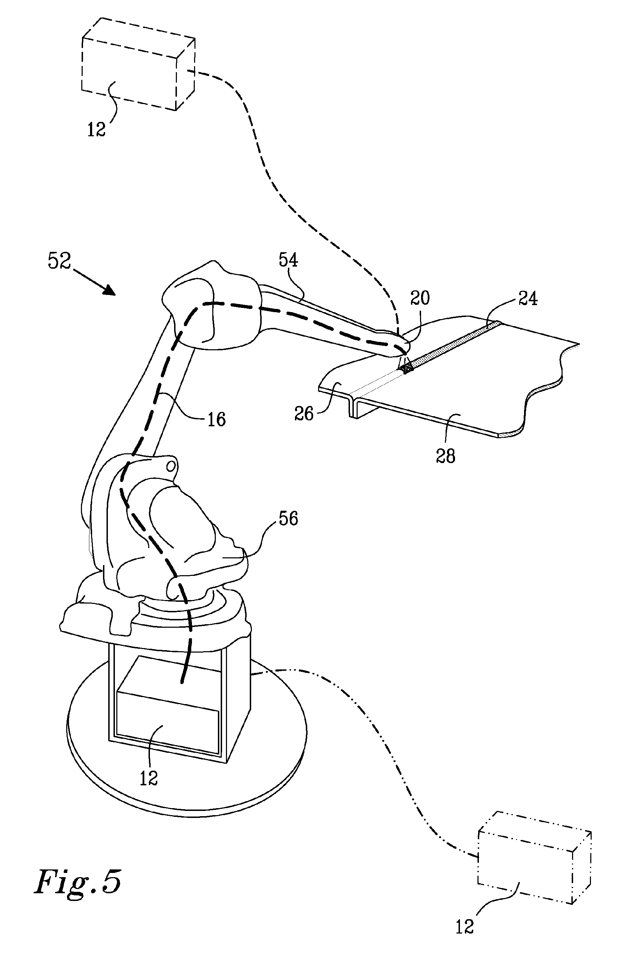

Fig. 5 illustrates a laser brazing robot 52, comprising a laser brazing heating assembly according to the invention. As may be gleaned from Fig. 5, the robot 52 preferably comprises an arm 54 adapted to guide at least the distal end 20 of the fibre 16. Thus, the robot is adapted to guide a non-circular laser spot over a filler material 24 located in a junction between a first member 26 and a second member 28.

Furthermore, Fig. 5 illustrates that the laser source 12 is preferably arranged at a distance from the arm 54 in order to distance the expensive laser source from the potentially hazardous brazing area. As illustrated in Fig. 5, the laser source may be placed on the main body of the robot 52. However, the laser source 12 may instead be located at a distance from the main body 56 as indicated by the dashed and dotted lines in Fig. 5, and may preferably be located in a safety device (not shown), protecting the laser source from damaging impacts. As further illustrated in Fig. 5, at least a portion of the optic fibre may be carried by the robot 52. However, as illustrated by the dashed lines in Fig. 5, the laser source 12 may also be stored at a location above the robot 52 and the optic fibre 16 may hang down from the laser source location to the arm 54 of the robot 52.

The present invention should not be considered as limited by the embodiments and figures described herein. Rather, the full scope of the invention should be determined by the appended claims, with reference to the description and drawings.

## Claims

1. A laser brazing heating assembly (10), comprising a laser source (12) adapted to produce a laser beam (14), said assembly (10) further comprising an optic fibre (16) having a proximal end (18) and a distal end (20), said proximal end (18) being connected to said laser source (12) and said distal end (20) being adapted to emit said laser beam (14) **characterized in that** at least a portion (22) of said fibre (16), extending along the length of said fibre (16) and being located at said distal end (20), has a non-circular cross section.

2. The laser brazing heating assembly (10) according to claim 1, wherein said cross section of said fibre (16) is substantially constant from said distal end (20) to said proximal end (18).

3. The laser brazing heating assembly (10) according to any one of the preceding claims, wherein said cross section is substantially square.

4. The laser brazing heating assembly (10) according to any one of the preceding claims, wherein the cross-sectional area of said portion (22) of said fibre (16) is in the range of 0.01 - 0.8 mm², preferably in the range of 0.1 - 0.5 mm².

5. The laser brazing heating assembly (10) according to any one of the preceding claims, wherein the length of said optic fibre is more than 5 m, preferably more than 10 m.

6. The laser brazing heating assembly (10) according to any one of the preceding claims, wherein said assembly (10) further comprises an optics arrangement (30) adapted to communicate optically with said distal end (20), said optics arrangement (30) comprising at least one of the following: a condenser lens (36); a divergent lens (32), or a deflection mirror (34).

7. The laser brazing heating assembly (10) according claim 6, wherein said assembly further comprises connection means adapted to mechanically connect said distal end (20) and said optics arrangement (30).

8. The laser brazing heating assembly (10) according to any one of the preceding claims, wherein said assembly (10) further comprises an attachment arrangement (40) adapted to optically connect said laser source (12) and said proximal end (18) of said fibre (16), said attachment arrangement (40) comprising a housing (42) with an opening (44), said housing (42) being adapted to centre said proximal end (18) within said opening (44), said attachment arrangement (40) further comprising a focussing lens (46) adapted to focus said laser beam (14) from said laser source (12) onto said proximal end (18).

9. The laser brazing heating assembly (10) according claim 8, wherein said focussing lens (46) and said proximal end (18) are spaced by a distance constituting a focal distance (L_{f}), said focal distance (L_{f}) being greater than 20 mm, preferably greater than 50 mm.

10. The laser brazing heating assembly (10) according to any one of the preceding claims, wherein said laser source (12) is adapted to produce said laser beam (14) such that said laser beam (14) has a cross-sectional area in the range of 180 - 3000 mm², preferably within the range of 300 - 900 mm².

11. A laser brazing tool (48), comprising the laser brazing heating assembly (10) according to any one of the preceding claims and means (50) for providing a filler material (24) in the vicinity of said distal end (20).

12. A laser brazing robot (52), comprising a laser brazing heating assembly (10) according any one of claims 1-10 and/or a laser brazing tool (48) according to claim 11.

13. The laser brazing robot (52) according to claim 12, wherein said robot (52) comprises an arm (54) adapted to guide at least said distal end (20) of said fibre (16) and said laser source (12) is arranged at a distance from said arm (54).

14. The laser brazing robot (52) according to claim 13, wherein said robot (52) further comprises a main body (56) connected to said arm (54) and said laser source (12) is located at a distance from said main body (56).

15. The use of an optical fibre (16) in a laser brazing heating assembly (10) or a laser brazing tool (48), wherein at least a portion of said fibre (16) extending along the length of said fibre (16) and being located at the distal end has a non-circular cross section.

16. The use of an optical fibre (16) according to claim 15, wherein said fibre (16) has a substantially constant cross section.

17. The use of an optical fibre (16) according to claim 15 or 16, wherein said fibre (16) has a square cross section.

18. The use of an optical fibre (16) according to any one of claims 15 to 17, wherein the cross-sectional area of said portion of said fibre (16) is in the range of 0.01 - 0.8 mm², preferably in the range of 0.1 - 0.5 mm².
